# EUROPEAN PATENT APPLICATION

(11) **EP 4 694 003 A1**
(43) Date of publication of application: **11.02.2026**
(21) Application number: 24784403.8
(22) Date of filing: 03.04.2024
(51) Int. Cl.: H04L 5/00

(54) **COMMUNICATION METHOD AND APPARATUS AND STORAGE MEDIUM**

(30) Priority: 07.04.2023 CN 202310412332
(71) Applicant: Huawei Technologies Co., Ltd., Shenzhen, Guangdong 518129 (CN)
(72) Inventor: HUANG, Wenwen, Shenzhen, Guangdong 518129 (CN); HUA, Meng, Shenzhen, Guangdong 518129 (CN); JIAO, Minghan, Shenzhen, Guangdong 518129 (CN)
(74) Representative: Pfenning, Meinig & Partner mbB
(86) International application number: PCT/CN2024/085999
(87) International publication number: WO 2024/208321

(57) **Abstract**

A communication method and apparatus, and a storage medium are disclosed. The method includes: A terminal receives first configuration information from a network device, where the first configuration information may include DRX configuration information of a first cell, and the DRX configuration information of the first cell indicates DRX non-active time of the first cell. If the terminal is within the DRX non-active time of the first cell when needing to send first information, the terminal may not be constrained by DRX of the first cell, and the terminal may send, in the first cell, the first information within the DRX non-active time of the first cell, where the first information includes hybrid automatic repeat request-acknowledgment HARQ-ACK information and/or a scheduling request SR. Therefore, when cell DRX active time does not completely overlap cell DTX active time and/or C-DRX active time, signal transmission can also be performed between the terminal and the network device, and a transmission delay can be reduced.

## Description

### CROSS-REFERENCE TO RELATED APPLICATIONS

This application claims priority to Chinese Patent Application No. 202310412332.X, filed with the China National Intellectual Property Administration on April 7, 2023 and entitled "COMMUNICATION METHOD AND APPARATUS, AND STORAGE MEDIUM", which is incorporated herein by reference in its entirety.

### TECHNICAL FIELD

This application relates to the field of wireless communication, and in particular, to a communication method and apparatus, and a storage medium.

### BACKGROUND

As communication develops, spectrums used for a communication system are increasingly wide, a quantity of configured transmit antennas is increasingly large, and power consumption of a network device and a terminal is increasingly high. Therefore, both network energy saving (or referred to as base station energy saving) and terminal energy saving are of great significance. Connected-discontinuous reception (connected-discontinuous reception, C-DRX) is one of terminal energy-saving solutions. From a perspective of a terminal side, based on the C-DRX, the terminal may not receive a downlink signal within C-DRX non-active time (non-active time), thereby achieving energy-saving for the terminal. To reduce power consumption on a network side, cell discontinuous transmission (cell discontinuous transmission, cell DTX) and cell discontinuous reception (cell discontinuous reception, cell DRX) are introduced. The cell DTX may include active time and non-active time, and the cell DRX may also include active time and non-active time. From a perspective of the network side, based on the cell DTX, the network device may not send a downlink signal within the cell DTX non-active time, and correspondingly, the terminal may not receive the downlink signal; and based on the cell DRX, the network device may not receive an uplink signal within the cell DRX non-active time, and correspondingly, the terminal may not send the uplink signal. The network device notifies the terminal of configuration information of the cell DTX and/or the cell DRX, and the network device and the terminal may not perform signal transmission within the cell DTX non-active time and/or the cell DRX non-active time.

After the cell DTX, the cell DRX, and the C-DRX are independently configured, a case in which the cell DRX active time does not completely overlap the cell DTX active time and/or C-DRX active time may occur. In this case, one of a cell DRX mechanism and a cell DTX mechanism and/or a C-DRX mechanism is within the active time, and the other mechanism is within the non-active time. How to perform signal transmission between the terminal and the network device becomes an urgent problem to be resolved.

### SUMMARY

Embodiments of this application provide a communication method and apparatus, and a storage medium, to perform signal transmission between a terminal and a network device when cell DRX active time does not completely overlap cell DTX active time and/or C-DRX active time.

According to a first aspect, this application provides a communication method. The method may be performed by a terminal or a module used in the terminal. An example in which the method may be performed by the terminal is used. In the method, the terminal receives first configuration information from a network device, where the first configuration information includes discontinuous reception DRX configuration information of a first cell, and the DRX configuration information of the first cell indicates DRX non-active time of the first cell; and then, the terminal sends, in the first cell, first information within the DRX non-active time of the first cell, where the first information may include hybrid automatic repeat request-acknowledgment HARQ-ACK information and/or a scheduling request SR.

In this application, the network device may configure DRX of the first cell, and the terminal may also configure DRX of the first cell. In addition, the network device and the terminal may further configure C-DRX and/or DTX of the first cell, or may not configure C-DRX and/or DTX of the first cell.

According to the foregoing method, if the terminal is within the DRX non-active time of the first cell when needing to send the first information, the terminal may send the first information within the DRX non-active time of the first cell without being constrained by the DRX of the first cell, and does not need to wait for DRX active time of a next DRX cycle of the first cell to send the first information, so that when cell DRX active time does not completely overlap cell DTX active time and/or C-DRX active time, signal transmission can also be performed between the terminal and the network device, and a transmission delay can be reduced.

In a possible design, sending, in the first cell, the first information within the DRX non-active time of the first cell may include: sending the first information in a first time period within the DRX non-active time of the first cell; and skipping sending, in the first cell, the HARQ-ACK information and the SR in a time period other than the first time period within the DRX non-active time of the first cell.

According to this design, when the terminal needs to send the first information within the DRX non-active time of the first cell, the terminal may send the first information within a part of the DRX non-active time of the first cell (for example, the first time period). In this way, the first information can be sent by the terminal, and a transmission delay of the first information can be reduced. The HARQ-ACK and the SR are not sent in the first cell in the time period other than the first time period within the DRX non-active time of the first cell. In this way, power consumption of the terminal can be reduced.

In a possible design, a length of the first time period is indicated by the network device, or a length of the first time period is predefined in a protocol.

In a possible design, the first information is the HARQ-ACK information, the first time period is indicated by the network device, and the method includes: receiving first downlink control information DCI, where the first DCI indicates a sending occasion of the HARQ-ACK information; and determining a start position of the first time period based on the sending occasion of the HARQ-ACK information.

According to this design, when the terminal needs to send the HARQ-ACK information within the DRX non-active time of the first cell, the terminal determines the start position of the first time period based on the sending occasion of the HARQ-ACK information indicated by the network device. If the sending occasion of the HARQ-ACK information indicated by the first DCI is exactly within the DRX non-active time of the first cell, the network device still receives the HARQ-ACK information on the sending occasion of the HARQ-ACK information although the network device enters the DRX non-active time. In this way, the first information can be sent by the terminal within the DRX non-active time of the first cell, and a transmission delay of the first information can be reduced.

According to a second aspect, this application provides a communication method. The method may be performed by a terminal or a module used in the terminal. An example in which the method may be performed by the terminal is used. In the method, the terminal receives first configuration information from a network device, where the first configuration information includes discontinuous transmission DTX configuration information of a first cell, and the DTX configuration information of the first cell indicates DTX non-active time of the first cell; and receives, in the first cell, second downlink control information DCI within the DTX non-active time of the first cell, where the second DCI includes DCI scrambled by using one of RNTIs: a C-RNTI, a CS-RNTI, or an MCS-C-RNTI.

In this application, the network device may configure DTX of the first cell, and the terminal may also configure DTX of the first cell. In addition, the network device and the terminal may further configure DRX of the first cell, or may not configure DRX of the first cell.

According to the foregoing method, if the terminal is within the DTX non-active time of the first cell when having a requirement for receiving the second DCI, the terminal may receive, in the first cell, the second DCI within the DTX non-active time of the first cell without being constrained by the DTX of the first cell, and does not need to wait for DTX active time of a next DTX cycle of the first cell to receive the second DCI, so that when cell DRX active time does not completely overlap cell DTX active time and/or C-DRX active time, signal transmission can also be performed between the terminal and the network device, and a transmission delay can be reduced.

In a possible design, receiving the second DCI within the DTX non-active time of the first cell may include: receiving, in the first cell, the second DCI within the DTX non-active time of the first cell based on a sent scheduling request SR, where the second DCI is for scheduling first uplink data of the terminal; or receiving, in the first cell, the second DCI within the DTX non-active time of the first cell based on a negative acknowledgment that is sent to the network device and that is for first downlink data, where the second DCI is for scheduling retransmission of the first downlink data. According to this design, the second DCI can be received by the terminal within the DTX non-active time of the first cell, and a transmission delay of the second DCI can be reduced.

In a possible design, receiving the second DCI within the DTX non-active time of the first cell may include: receiving the second DCI in a second time period within the DTX non-active time of the first cell; and skipping receiving, in the first cell, the DCI in a time period other than the second time period within the DTX non-active time of the first cell.

According to this design, when the terminal has a requirement for receiving the second DCI within the DTX non-active time of the first cell, the terminal may receive the second DCI within a part of the DTX non-active time of the first cell (for example, the second time period). In this way, the second DCI can be received by the terminal, and a transmission delay of the second DCI can be reduced. The second DCI is not received in the first cell in the time period other than the second time period within the DTX non-active time of the first cell. In this way, power consumption of the terminal can be reduced.

In a possible design, a length of the second time period is indicated by the network device, or a length of the second time period is predefined in a protocol.

In a possible design, a start position of the second time period is a start position or an end position of a time unit in which the SR is sent, or a start position of the second time period is a start position or an end position of a time unit in which the negative acknowledgment that is for the first downlink data is sent.

In a possible design, the first configuration information further includes DTX configuration information of a second cell in a cell group, the first cell is a cell in the cell group, and the method may further include: receiving, in the second cell, third DCI in the second time period. In this way, the terminal may receive the second DCI of the first cell, and may also receive the third DCI of the second cell.

According to a third aspect, this application provides a communication method. The method may be performed by a network device or a module used in the network device. An example in which the method may be performed by the network device is used. In the method, the network device sends first configuration information to a terminal, where the first configuration information includes discontinuous reception DRX configuration information of a first cell, and the DRX configuration information of the first cell indicates DRX non-active time of the first cell; and receives, in the first cell, first information within the DRX non-active time of the first cell, where the first information includes hybrid automatic repeat request-acknowledgment HARQ-ACK information and/or a scheduling request SR.

In a possible design, receiving, in the first cell, the first information within the DRX non-active time of the first cell includes: receiving the first information in a first time period within the DRX non-active time of the first cell; and skipping receiving, in the first cell, the HARQ-ACK and the SR in a time period other than the first time period within the DRX non-active time of the first cell.

In a possible design, the first time period is determined by the network device, or the first time period is predefined in a protocol.

In a possible design, the first information is the HARQ-ACK information, the first time period is indicated by the network device, and the method includes: sending first downlink control information DCI, where the first DCI indicates a sending occasion of the HARQ-ACK information, and the sending occasion of the HARQ-ACK information is for determining a start position of the first time period.

For technical effects brought by the third aspect or the implementations of the third aspect, refer to the descriptions of the technical effects of the first aspect or the implementations of the first aspect. Details are not described again.

According to a fourth aspect, this application provides a communication method. The method may be performed by a network device or a module used in the network device. An example in which the method may be performed by the network device is used. In the method, the network device sends first configuration information to a terminal, where the first configuration information includes discontinuous transmission DTX configuration information of a first cell, and the DTX configuration information of the first cell indicates DTX non-active time of the first cell; and sends, in the first cell, second downlink control information DCI within the DTX non-active time of the first cell, where the second DCI includes DCI scrambled by using one of RNTIs: a C-RNTI, a CS-RNTI, or an MCS-C-RNTI.

In a possible design, sending the second DCI within the DTX non-active time of the first cell includes: sending, in the first cell, the second DCI within the DTX non-active time of the first cell based on a received scheduling request SR, where the second DCI is for scheduling first uplink data of the terminal; or sending, in the first cell, the second DCI within the DTX non-active time of the first cell based on a negative acknowledgment that is received from the terminal and that is for first downlink data, where the second DCI is for scheduling retransmission of the first downlink data.

In a possible design, sending the second DCI within the DTX non-active time of the first cell includes: sending the second DCI in a second time period within the DTX non-active time of the first cell; and skipping sending, in the first cell, the DCI in a time period other than the second time period within the DTX non-active time of the first cell.

In a possible design, the second time period is determined by the network device, or the second time period is predefined in a protocol.

In a possible design, a start position of the second time period is a start position or an end position of a time unit in which the SR is sent, or a start position of the second time period is a start position or an end position of a time unit in which the negative acknowledgment that is for the first downlink data is sent.

In a possible design, the first configuration information further includes DTX configuration information of a second cell in a cell group, the first cell is a cell in the cell group, and the method further includes: sending, in the second cell, third DCI in the second time period.

For technical effects brought by the fourth aspect or the implementations of the fourth aspect, refer to the descriptions of the technical effects of the second aspect or the implementations of the second aspect. Details are not described again.

According to a fifth aspect, this application provides a communication apparatus. The communication apparatus may be a terminal or a module or a chip disposed in the terminal, or the communication apparatus may be a network device or a module or a chip disposed in the network device. The communication apparatus has a function for implementing any one of the first aspect to the fourth aspect and any possible design of the first aspect to the fourth aspect. For example, the communication apparatus includes a module, a unit, or a means corresponding to a step in any one of the first aspect to the fourth aspect and any possible design of the first aspect to the fourth aspect. The function, the unit, or the means may be implemented by software, or may be implemented by hardware, or may be implemented by hardware by executing corresponding software.

In a possible design, the communication apparatus includes a processing unit and a transceiver unit. The transceiver unit may be configured to receive and send a signal, to implement communication between the communication apparatus and another apparatus. For example, the communication apparatus is a network device, and the transceiver unit is configured to send data to a terminal. For another example, the communication apparatus is a terminal, and the transceiver unit is configured to send data to a network device. The processing unit may be configured to perform some internal operations of the communication apparatus. Functions performed by the processing unit and the transceiver unit may correspond to steps in any one of the first aspect to the fourth aspect and any possible design of any one of the first aspect to the fourth aspect.

In a possible design, the communication apparatus includes a processor, and may further include a transceiver. The transceiver is configured to receive and send a signal. The processor executes program instructions, to perform the method in any one of the first aspect to the fourth aspect and any possible design of the first aspect to the fourth aspect. The communication apparatus may further include one or more memories, and the memory is coupled to the processor. The one or more memories may be integrated with the processor, or may be disposed independent of the processor. This is not limited in this application. The memory may store a necessary computer program or instructions for implementing a function related to any one of the first aspect to the fourth aspect and any possible design of any one of the first aspect to the fourth aspect. The processor may execute the computer program or instructions stored in the memory. When the computer program or the instructions are executed, the communication apparatus is enabled to implement the method in any one of the first aspect to the fourth aspect and any possible design of any one of the first aspect to the fourth aspect.

In a possible design, the communication apparatus includes a processor and a memory. The memory may store a necessary computer program or instructions for implementing a function related to any one of the first aspect to the fourth aspect and any possible design of any one of the first aspect to the fourth aspect. The processor may execute the computer program or instructions stored in the memory. When the computer program or the instructions are executed, the communication apparatus is enabled to implement the method in any one of the first aspect to the fourth aspect and any possible design of any one of the first aspect to the fourth aspect.

In a possible design, the communication apparatus includes at least one processor and an interface circuit. The at least one processor is configured to communicate with another apparatus by using the interface circuit, and perform the method in any one of the first aspect to the fourth aspect and any possible design of any one of the first aspect to the fourth aspect.

According to a sixth aspect, this application provides a computer-readable storage medium. The computer storage medium stores computer-readable instructions. When a communication apparatus reads and executes the computer-readable instructions, the communication apparatus is enabled to perform the method in any one of the first aspect to the fourth aspect and any possible design of the first aspect to the fourth aspect.

According to a seventh aspect, this application provides a computer program product, where the computer program product includes a computer program or instructions. When a communication apparatus reads and executes the computer program or the instructions, the communication apparatus is enabled to perform the method in any one of the first aspect to the fourth aspect and any possible design of the first aspect to the fourth aspect.

According to an eighth aspect, this application provides a chip, where the chip includes a processor, and the processor is coupled to a memory, and is configured to read and execute a software program stored in the memory, to implement the method in any one of the first aspect to the fourth aspect and any possible design of the first aspect to the fourth aspect.

### BRIEF DESCRIPTION OF DRAWINGS

FIG. 1 is a diagram of an architecture of a communication system to which an embodiment of this application is applied;
FIG. 2 is a diagram of a C-DRX cycle according to an embodiment of this application;
FIG. 3 is a diagram of a C-DRX cycle according to an embodiment of this application;
FIG. 4 is a diagram of cell DRX and cell DTX according to an embodiment of this application;
FIG. 5 is a diagram of a communication method according to an embodiment of this application;
FIG. 6 is a diagram of DTX and DRX of a first cell according to an embodiment of this application;
FIG. 7 is a diagram of a communication method according to an embodiment of this application;
FIG. 8 is a diagram of DRX of a first cell according to an embodiment of this application;
FIG. 9 is a diagram of a communication apparatus according to an embodiment of this application; and
FIG. 10 is a diagram of a communication apparatus according to an embodiment of this application.

### DESCRIPTION OF EMBODIMENTS

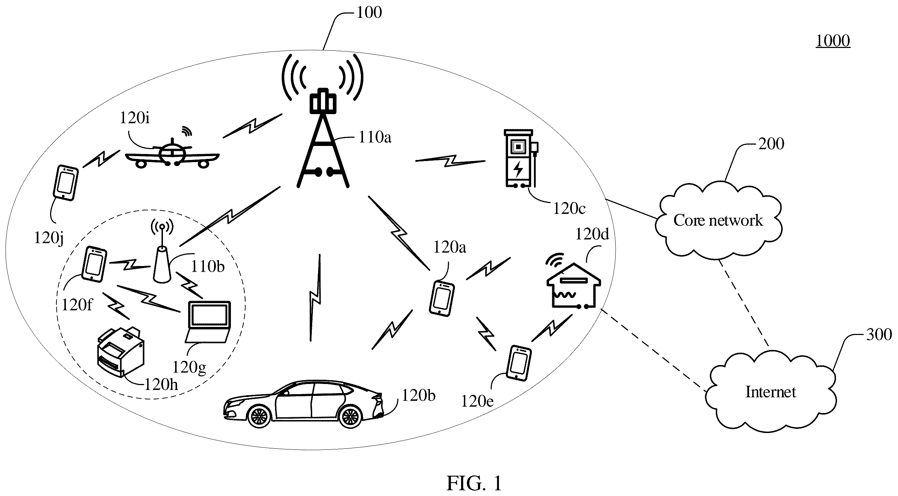

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. FIG. 1 is merely a diagram. The communication system may further include other network devices, for example, may further include a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation base station in a 6^{th} generation (6^{th} generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node, or the like. A specific technology and a specific device form that are used by the radio access network device are not limited in this embodiment of this application. For ease of description, a network device is short for the radio access network device, and a base station is used as an example of the radio access network device.

The terminal is a device with a wireless transceiver function, and may send a signal to the base station, or receive a signal from the base station. The terminal may also be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in this embodiment of this application.

The base station and the terminal may be at fixed positions, or may be movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j that accesses to the radio access network 100 through 120i, a terminal 120i is a base station. However, for a base station 110a, 120i is a terminal, to be specific, communication between 110a and 120i is performed based on a radio air interface protocol. It is clear that communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertze (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may be performed by a module (for example, a chip or a modem) in the terminal, or may be performed by an apparatus including the function of the terminal.

In this application, the base station sends a downlink signal or downlink information to the terminal. The downlink information is carried on a downlink channel. The terminal sends an uplink signal or uplink information to the base station. The uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

It may be understood that, in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely used as examples of a downlink data channel, a downlink control channel, and an uplink data channel respectively. In different systems and different scenarios, the data channel and the control channel may have different names. This is not limited in embodiments of this application.

Embodiments of this application provide several possible communication methods. The communication method may be performed by a network device or a chip, a unit, or a module in the network device, or the communication method is performed by a terminal or a chip, a unit, or a module in the terminal. The network device is, for example, the access network device 110a or the access network device 110b in FIG. 1. Alternatively, the network device may be a communication device having a function of the network device, or a chip, a unit, or a module inside the communication device having the function of the network device. The terminal is, for example, any terminal 120 shown in FIG. 1. Alternatively, the terminal may be a communication device having a function of the terminal, or a chip, a unit, or a module inside the communication device having the function of the terminal. For ease of understanding, in embodiments of this application, an example in which the communication method is performed by the terminal and the network device is used for description.

The following describes some terms in embodiments of this application, to facilitate understanding of a person skilled in the art.

### (1) C-DRX

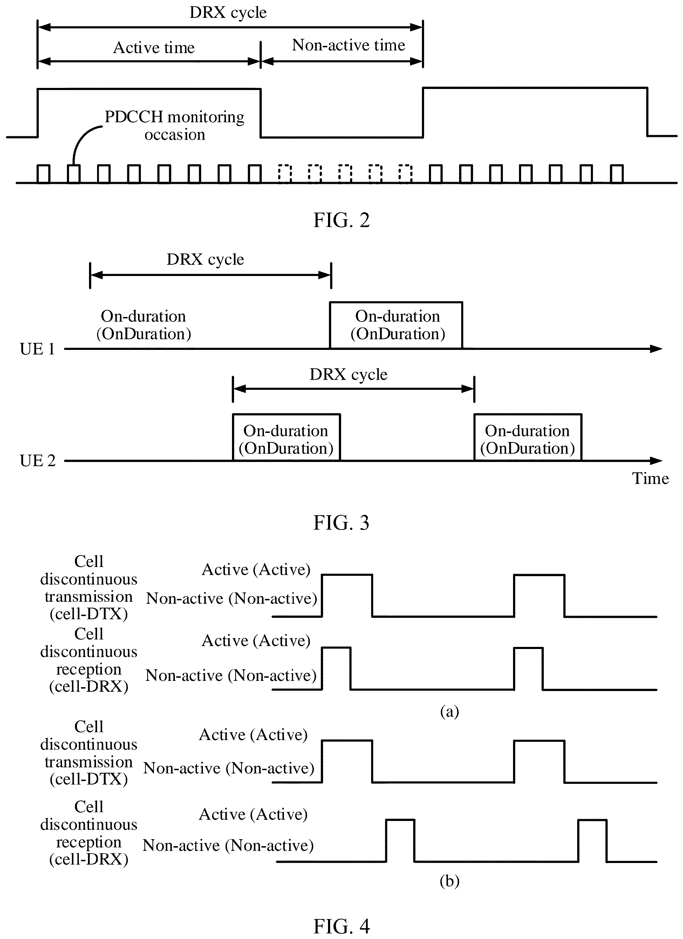

The C-DRX is one of terminal energy-saving solutions. For a terminal for which the C-DRX is configured, the terminal may periodically enable or disable, based on a DRX cycle configured by a network device, a receiver to monitor a PDCCH, thereby reducing power consumption of the terminal. FIG. 2 is a diagram of a C-DRX cycle. One C-DRX cycle includes active time, that is, active time shown in FIG. 2. Within the active time, the terminal needs to monitor the PDCCH. The C-DRX cycle further includes non-active time, that is, non-active time shown in FIG. 2. The C-DRX non-active time is time other than the active time in the C-DRX cycle, and may also be referred to as sleep time. A specific name is not limited in this application. The terminal monitors the PDCCH on a PDCCH monitoring occasion within the active time, and does not monitor the PDCCH within the non-active time, so that the terminal may be in a sleep state, thereby reducing power consumption of the terminal.

It should be noted that, a C-DRX mechanism is mainly for controlling a PDCCH scrambled by using one of the following radio network temporary identifiers (radio network temporary identifier, RNTI): a cell-RNTI (cell-RNTI, C-RNTI), a cancellation indication-RNTI (cancellation indication-RNTI, CI-RNTI), a configured scheduling-RNTI (configured scheduling-RNTI, CS-RNTI), an interruption-RNTI (interruption-RNTI, INT-RNTI), a slot format indication-RNTI (slot format indication-RNTI, SFI-RNTI), a semi-persistent-channel state indication-RNTI (semi-persistent-channel state indication-RNTI, SP-CSI-RNTI), a transmit power control-physical uplink control channel-RNTI (transmit power control-physical uplink control channel-RNTI, TPC-PUCCH-RNTI), a transmit power control-physical uplink shared channel-RNTI (transmit power control-physical uplink shared channel-RNTI, TPC-PUSCH-RNTI), a transmit power control-sounding reference signal-RNTI (transmit power control-sounding reference signal-RNTI, TPC-SRS-RNTI), an availability indication-RNTI (availability indication-RNTI, AI-RNTI), a sidelink-RNTI (sidelink-RNTI, SL-RNTI), a sidelink configured scheduling-RNTI (sidelink configured scheduling-RNTI, SLCS-RNTI), and a sidelink semi-persistent scheduling vehicle-RNTI (SL semi-persistent scheduling V-RNTI). That is, within the non-active time, the UE does not monitor the PDCCH scrambled by using one of the foregoing RNTIs. A PDCCH scrambled by using a system information-RNTI (system information-RNTI, SI-RNTI), a random access-RNTI (random access-RNTI, RA-RNTI), a message B-RNTI (message B-RNTI, MsgB-RNTI), or a temporary cell-RNTI (temporary cell-RNTI, TC-RNTI) is not constrained by the C-DRX mechanism.

Specifically, the C-DRX active time may include running time of a DRX on-duration timer (drx-onDurationTimer), a DRX inactivity timer (drx-InactivityTimer), a DRX downlink retransmission timer (drx-RetransmissionTimerDL), and a DRX uplink retransmission timer (drx-RetransmisionTimerUL). drx-onDurationTimer and drx-InactivityTimer are not differentiated in uplink and downlink.

The C-DRX active time may further include: a running period of ra-ContentionResolutionTimer (used for contention resolution in a random access process) or msgB-ResponseWindow (used for contention resolution in 2-step random access); a waiting period after the UE sends a scheduling request (scheduling request, SR) on a PUCCH; and a period in which the UE has not received, after successfully receiving a non-contention-based random access response (random access response, RAR), a PDCCH indicating new transmission.

drx-onDurationTimer: The network device configures a length of drx-onDurationTimer to the terminal by using RRC signaling. A long DRX cycle (Long DRX cycle) is used as an example. A parameter drx-LongCycle of a length of the long DRX cycle, a parameter drx-StartOffset for determining a subframe at which the DRX cycle starts, and a slot offset drx-SlotOffset in the subframe at which the DRX cycle starts are further configured. If the long DRX cycle is used, when a subframe number (subframe number) satisfies a formula [(SFN*10)+subframe number] modulo (drx-LongCycle)=drx-StartOffset, the terminal starts drx-onDurationTimer (onDurationTimer for short below). The SFN is a system frame number, and modulo represents a modulo operation. A system frame may also be referred to as a radio frame. One radio frame is 10 ms, the radio frame may include a plurality of subframes (subframe), and each subframe includes a plurality of slots. In other words, onDurationTimer is started after the subframe at which the long DRX cycle starts is offset by drx-SlotOffset. As shown in FIG. 2 and FIG. 3, the DRX on-duration timer appears periodically. When the DRX on-duration timer is started, the UE starts to monitor the PDCCH.

If a short DRX cycle (short DRX cycle) is used, when a subframe number satisfies a formula [(SFN*10)+subframe number] modulo (drx-ShortCycle)=(drx-StartOffset) modulo (drx-ShortCycle), the terminal starts drx-onDurationTimer, in other words, starts onDurationTimer after a subframe at which the short DRX cycle starts is offset by drx-SlotOffset.

The network device may configure a C-DRX parameter for the terminal by using RRC signaling. For details, refer to Table 1. A condition for triggering drx-InactivityTimer, drx-RetransmissionTimerDL, and drx-RetransmissionTimerUL is shown in the following Table 1. To be specific, the three timers are started only when data transmission is performed.

**Table 1**

| C-DRX parameter | Description (description) |
|---|---|
| drx-SlotOffset | Indicates a time offset before drx-onDurationTimer is started when a C-DRX cycle starts. |
| DRX long cycle start offset (drx-LongCycleStartOffset) | Includes drx-LongCycle and drx-StartOffset, which indicate duration of a long DRX cycle and start time of the DRX cycle respectively. |
| DRX short cycle (drx-ShortCycle) | Indicates duration of a short DRX cycle, where the short DRX cycle is optional, and the long DRX cycle and the short DRX cycle may be switched. |
| drx-ShortCycleTimer | Indicates on-duration in which a UE uses the short DRX cycle, where the parameter is optional. |
| drx-onDurationTimer | Indicates duration for continuously monitoring a PDCCH starting from each DRX cycle. |
| drx-InactivityTimer | When it is detected that the PDCCH indicates to schedule initial transmission of uplink (UL) or downlink (DL), the timer is started (or restarted), and the PDCCH continues to be monitored within running duration of the timer, where it may be understood that drx-InactivityTimer prolongs active time of the DRX cycle. |
| drx-HARQ-RTT-TimerDL | Indicates a minimum time length for which the UE needs to wait before DL retransmission scheduling may be received, where each downlink HARQ process (DL HARQ process) corresponds to one timer, and if it is detected that the PDCCH indicates downlink scheduling, a timer corresponding to a HARQ process is started after HARQ feedback. |
| drx-HARQ-RTT-TimerUL | Indicates a minimum time length for which the UE needs to wait before UL retransmission scheduling may be received, where each uplink HARQ process (UL HARQ process) corresponds to one timer, and if it is detected that the PDCCH indicates uplink scheduling, a timer corresponding to a HARQ process is started after a PUSCH (after a 1^{st} PUSCH if the PDCCH schedules a bundle of (a bundle of) PUSCHs). |
| drx-RetransmissionTimerDL | Indicates a maximum time length for which the UE expects to receive the DL retransmission scheduling, where each DL HARQ process corresponds to one timer, and if drx-HARQ-RTT-TimerDL expires and a PDSCH corresponding to a HARQ process is not correctly decoded, drx-RetransmissionTimerDL of the process is started. |
| drx-RetransmisionTimerUL | Indicates a maximum time length for which the UE expects to receive the UL retransmission scheduling, where each UL HARQ process corresponds to one timer, and if drx-HARQ-RTT-TimerUL expires, drx-RetransmissionTimerUL corresponding to a HARQ process is started. |

One or more cells may be configured for one terminal. In a multi-carrier scenario, a maximum of two DRX groups (group) may be configured for one terminal. In configuration of the two DRX groups, values of drx-onDurationTimer and drx-InactivityTimer are configured separately, and values of other parameters are the same for the two DRX groups. If no secondary DRX group (secondary DRX group) is configured for the terminal (that is, it is considered that there is only one DRX group), C-DRX parameters of all cells of the terminal are the same. For example, running time of drx-onDurationTimer of the terminal in all the cells is the same. If a secondary DRX group is configured for the terminal (that is, it is considered that there are two DRX groups), C-DRX parameters of the terminal in cells in a same group are the same. C-DRX parameters of different terminals may be different. As shown in FIG. 3, running time of drx-onDurationTimer of two UEs is not aligned. Although the terminal can achieve power-saving, from a perspective of a network side, to serve different UEs, the network device needs to be frequently woken up, and energy-saving of the network side is not ideal.

To reduce power consumption on the network side, cell DTX and/or DRX are/is introduced.

### (2) cell DTX

The cell DTX may include active time and non-active time. The cell DTX active time may also be referred to as on-duration or active on-duration of the cell DTX. The network device may normally send a signal within the cell DTX active time. The cell DTX non-active time is time other than the active time in a cell DTX cycle, and may also be referred to as non-active on-duration of the cell DTX. The network device may not send some or all downlink signals within the cell DTX non-active time, to achieve an effect of reducing power consumption on the network side. Correspondingly, the terminal may not receive some or all downlink signals. The network device notifies the terminal of configuration information of the cell DTX, and the terminal may not perform signal transmission within the cell DTX non-active time. To reduce network power consumption, the configuration information of the cell DTX is the same for a plurality of UEs. For example, the configuration information of the cell DTX is shared by the plurality of UEs in one cell. Specific names of the cell DTX active time and the cell DTX non-active time are not limited in this application.

### (3) cell DRX

The cell DRX may include active time and non-active time. The cell DRX active time may also be referred to as on-duration or active on-duration of the cell DRX, and the network device may normally receive a signal within the cell DRX active time. The cell DRX non-active time is time other than the active time in a cell DRX cycle, and may also be referred to as non-active on-duration of the cell DRX. The network device may not receive some or all uplink signals within the cell DRX non-active time, to achieve the effect of reducing power consumption on the network side. Correspondingly, the terminal may not send some or all uplink signals. The network device notifies the terminal of configuration information of the cell DRX, and the terminal may not perform signal transmission within the cell DRX non-active time. To reduce network power consumption, the configuration information of the cell DRX is the same for a plurality of UEs. For example, the configuration information of the cell DRX is shared by the plurality of UEs in one cell. Specific names of the cell DRX active time and the cell DRX non-active time are not limited in this application.

The cell DTX, the cell DRX, and the C-DRX may be configured independently. Therefore, a case in which the cell DRX active time does not completely overlap the cell DTX active time and/or the C-DRX active time is likely to occur. For example, as shown in (a) in FIG. 4, the cell DTX active (Active) time partially overlaps the cell DRX active time. For another example, as shown in (b) in FIG. 4, the cell DTX active time and the cell DRX active time have no overlap. In these cases, one of a cell DRX mechanism and a cell DTX mechanism and/or the C-DRX mechanism is within the active time, and the other mechanism is within the non-active time. How to perform signal transmission between the terminal and the network device becomes an urgent problem to be resolved.

In view of this, embodiments of this application provide a communication method and apparatus. In a manner, a terminal sends, in a first cell, uplink information within DRX non-active time of the first cell. Correspondingly, a network device receives, in the first cell, the uplink information within the DRX non-active time of the first cell. In another manner, a terminal receives, in a first cell, downlink information within C-DRX non-active time or DTX non-active time of the first cell. Correspondingly, a network device sends, in the first cell, the downlink information within the C-DRX non-active time or the DTX non-active time of the first cell.

The following describes the method provided in embodiments of this application with reference to the accompanying drawings.

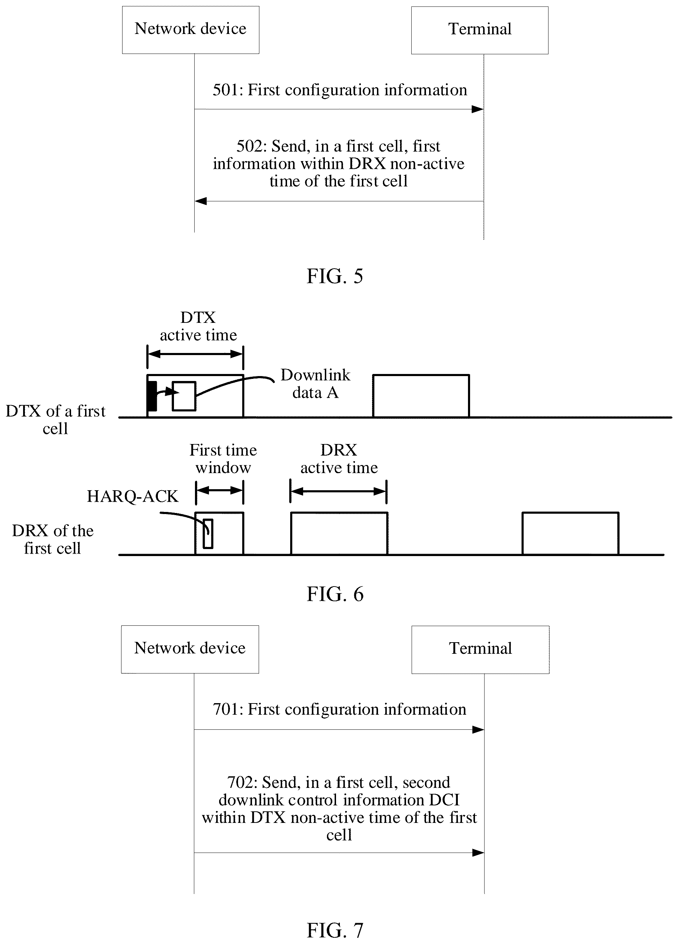

FIG. 5 shows an example of a possible schematic flowchart of a communication method according to an embodiment of this application. A solution in FIG. 5 is described by using an example in which a network device and a terminal interact with each other. For related descriptions of the network device and the terminal, refer to the foregoing content. Details are not described herein again.

As shown in FIG. 5, the method includes the following steps.

Step 501: The network device sends first configuration information to the terminal. Correspondingly, the terminal receives the first configuration information from the network device.

In an implementation, the first configuration information includes DRX configuration information of a first cell, and the DRX configuration information of the first cell indicates DRX non-active time of the first cell. For example, a serving cell of the terminal is a cell 1, and the network device may send first configuration information of the cell 1 to the terminal.

In this embodiment of this application, that the network device sends the first configuration information to the terminal may be understood as that the network device configures or enables DRX of the first cell, and that the terminal receives the first configuration information may be understood as that the DRX of the first cell is configured or enabled for the terminal. In some other embodiments, after sending the first configuration information to the terminal, the network device may further send indication information to the terminal, where the indication information indicates the terminal to enable or switch the DRX of the first cell. After receiving the indication information, the terminal enables or switches the DRX of the first cell. The first configuration information may be carried in RRC signaling, and the indication information may be carried in downlink control information (downlink control information, DCI) or a MAC control element (control element, CE).

The network device may not receive some uplink signals within the DRX non-active time of the first cell. For example, the network device may disable, within the DRX non-active time, a channel configured to receive an uplink signal. For another example, the network device may disable, within the DRX non-active time, a radio frequency processor configured to receive an uplink signal. For another example, the network device may disable, within the DRX non-active time, an intermediate frequency processor configured to receive an uplink signal. For another example, the network device may disable, within the DRX non-active time, a baseband processor configured to receive an uplink signal. In this way, power consumption of the network device can be reduced. Correspondingly, the terminal may not send some uplink signals within the DRX non-active time of the first cell. For example, the terminal may disable, within the DRX non-active time, a channel configured to send an uplink signal. For another example, the terminal may disable, within the DRX non-active time, a radio frequency processor configured to send an uplink signal. For another example, the terminal may disable, within the DRX non-active time, an intermediate frequency processor configured to send uplink signal. For another example, the terminal may disable, within the DRX non-active time, a baseband processor configured to send an uplink signal.

In another implementation, the DRX configuration information of the first cell further indicates DRX active time of the first cell. The network device may receive some uplink signals within the DRX active time of the first cell. Correspondingly, the terminal may send some uplink signals within the DRX active time of the first cell.

In this embodiment of this application, the DRX configuration information of the first cell may include a DRX cycle, and one DRX cycle includes DRX active time and DRX non-active time. The network device may repeatedly enter the DRX active time and the DRX non-active time in a unit of a time length of the cycle. The DRX configuration information of the first cell may directly or indirectly indicate the DRX non-active time of the first cell. For example, the DRX configuration information of the first cell may indicate the DRX cycle and the DRX active time of the first cell, and the network device and the terminal determine the DRX non-active time of the first cell based on the DRX cycle and the DRX active time of the first cell. A specific implementation in which the DRX configuration information of the first cell indicates the DRX non-active time of the first cell is not limited in this application.

In still some implementations, when the network device and/or the terminal configure/configures the DRX of the first cell, C-DRX and/or DTX of the first cell may be configured or not configured.

For example, the network device and/or the terminal configure/configures the C-DRX and/or the DTX of the first cell. The first configuration information may further include C-DRX configuration information and/or DTX configuration information of the first cell. For the C-DRX configuration information, refer to Table 1, and the DTX configuration information of the first cell may directly or indirectly indicate DTX active time of the first cell. The network device may send any downlink signal within C-DRX active time and/or the DTX active time of the first cell. Correspondingly, the terminal may receive any downlink signal within the C-DRX active time and/or the DTX active time of the first cell. It should be understood that the network device may not send some downlink signals within C-DRX non-active time and/or DTX non-active time of the first cell. Correspondingly, the terminal may not receive some downlink signals within the C-DRX active time and/or the DTX active time of the first cell.

For example, if the network device does not configure the C-DRX and/or the DTX of the first cell, the network device may always be in a state in which downlink signal is normally sent, that is, the network device may send the downlink signal based on specific configuration information of the downlink signal. For another example, if the terminal does not configure the C-DRX and/or the DTX of the first cell, the terminal may always be in a state in which the downlink signal can be normally received, and may receive the downlink signal based on the specific configuration information of the downlink signal.

It should be understood that the DTX configuration information of the first cell and the C-DRX configuration information and/or the DTX configuration information of the first cell may be carried in a same message for sending, or may be carried in different messages for sending. This is not limited in this application, and a sequence relationship of sending the DRX configuration information of the first cell and sending the C-DRX configuration information and/or the DTX configuration information of the first cell by the network device is not limited in this application.

Step 502: The terminal sends, in the first cell, first information within the DRX non-active time of the first cell. Correspondingly, the network device receives, in the first cell, the first information within the DRX non-active time of the first cell.

In a possible implementation, the terminal sends, in the first cell, the first information within the DRX non-active time of the first cell, where the time falls within the C-DRX active time and/or the DTX active time of the first cell. Correspondingly, the network device receives, in the first cell, the first information within the DRX non-active time of the first cell, where the time falls within the C-DRX active time and/or the DTX active time of the first cell.

In this embodiment of this application, the first information may include hybrid automatic repeat request-acknowledgment hybrid automatic repeat request (hybrid automatic repeat request-acknowledgment, HARQ-ACK) information and/or a scheduling request SR. The first information may further include aperiodic channel state information (channel state information, CSI).

In a possible implementation, within the DRX non-active time of the first cell, in the first cell, the terminal sends only the HARQ-ACK information and does not send another uplink signal, or sends only the SR and does not send another uplink signal, or sends only the aperiodic CSI and does not send another uplink signal. Correspondingly, within the DRX non-active time of the first cell, the network device receives only one of the foregoing signals, and does not receive another uplink signal.

In a possible implementation, the terminal sends the first information in a first time period within the DRX non-active time of the first cell, and skips sending, in the first cell, the HARQ-ACK, the SR, and the aperiodic CSI in a time period other than the first time period within the DRX non-active time of the first cell. Correspondingly, the network device receives the first information in the first time period within the DRX non-active time of the first cell, and skips receiving, in the first cell, the HARQ-ACK, the SR, and the aperiodic CSI in the time period other than the first time period within the DRX non-active time of the first cell.

Optionally, a first time window is further in the C-DRX active time and/or the DTX active time of the first cell.

A length and/or a start position of the first time period may be indicated by the network device, or a length and/or a start position of the first time period may be predefined in a protocol. A unit of the length of the first time period may be a symbol, a slot, a subframe, a frame, a millisecond, or a second. This is not limited in this application.

In an implementation, the first time period may be a time unit in which a sending occasion that is of the first information and that is indicated by the network device is located.

An example in which the first information is the HARQ-ACK information is used. The start position of the first time period may be indicated by the network device. In a possible implementation, the network device may send first downlink control information DCI. Correspondingly, the terminal receives the first downlink control information DCI. The first DCI indicates a sending occasion of the HARQ-ACK information. For example, when the first DCI is for scheduling a PDSCH, a PUCCH resource indicator field (PUCCH resource indicator field) in the first DCI may indicate the sending occasion of the HARQ-ACK information corresponding to the PDSCH. For another example, when the first DCI indicates semi-persistent PDSCH release, the sending occasion of the HARQ-ACK information is an N^{th} symbol after the last symbol in the first DCI, where N is a value predefined in a protocol. Then, the terminal determines the start position of the first time period based on the sending occasion of the HARQ-ACK information. The length of the first time period may be a predefined value, for example, X slots, where X is greater than or equal to 1. Alternatively, the length of the first time period may be a value configured by the network device. In the first time period determined based on the sending occasion of the HARQ-ACK information, the terminal device may send the HARQ-ACK information, the SR, and/or the aperiodic CSI.

In an example, for example, the network device sends downlink indication information 1 through a PDCCH within the C-DRX active time and/or the DTX active time of the first cell (or a cell other than the first cell), where the downlink indication information 1 may be for scheduling the PDSCH. After receiving the downlink indication information 1 and the PDSCH, the UE needs to feed back the HARQ-ACK information to a base station. In this case, the terminal is within the DRX non-active time of the first cell, and the terminal may send, on the sending occasion of the HARQ-ACK information indicated by the first DCI, the HARQ-ACK information to the network device without being constrained by DRX configuration of the first cell.

An example in which the first information is the SR is used. The network device may send SR configuration information to the terminal within the C-DRX active time and/or the DTX active time of the first cell (or a cell other than the first cell). The terminal determines a sending occasion of the SR based on the SR configuration information. For example, the SR configuration information carries an SR cycle. The terminal may send the SR on the sending occasion of the SR when the terminal needs to send the SR. The length of the first time period may be a predefined value, for example, X slots, where X is greater than or equal to 1. Alternatively, the length of the first time period may be a value configured by the network device.

In an example, for example, if the terminal needs to send uplink data, the terminal needs to send the SR to the network device. In this case, the terminal is within the DRX non-active time of the first cell, and the terminal may send, in the first cell, the SR to the network device on the sending occasion of the SR without being constrained by the DRX configuration of the first cell. In the first time period determined based on the sending occasion of the SR, the terminal device may simultaneously send, in the first cell, the HARQ-ACK information, the SR, and/or the aperiodic CSI.

An example in which the first information is the aperiodic CSI is used. The start position of the first time period is indicated by the network device. In a possible implementation, the network device may send first downlink control information DCI. Correspondingly, the terminal receives the first downlink control information DCI. The first DCI indicates a sending occasion of the aperiodic CSI. Then, the terminal determines the start position of the first time period based on the sending occasion of the aperiodic CSI. The length of the first time period may be a predefined value, for example, X slots, where X is greater than or equal to 1. Alternatively, the length of the first time period may be a value configured by the network device. In the first time period determined based on the sending occasion of the aperiodic CSI, the terminal device may send the HARQ-ACK information, the SR, and/or the aperiodic CSI.

In an example, for example, the network device sends downlink indication information 1 through a PDCCH within the C-DRX active time and/or the DTX active time of the first cell (or a cell other than the first cell), where the downlink indication information 1 may indicate the sending occasion of the aperiodic CSI. The UE receives the downlink indication information 1, and needs to feed back the aperiodic CSI to a base station. In this case, the terminal is within the DRX non-active time of the first cell, and the terminal may send, on the sending occasion of the aperiodic CSI indicated by the first DCI, the aperiodic CSI to the network device without being constrained by the DRX configuration of the first cell.

In another implementation, the length of the first time period may be a length of a time window (or duration of a timer) indicated by the network device or predefined in a protocol.

An example in which the time window is indicated by the network device is used. The network device sends downlink indication information 1 to the terminal, where the downlink indication information 1 may be for scheduling the PDSCH. After receiving the downlink indication information 1, the UE determines a start position of the time window (or the timer) based on sending time of the HARQ-ACK information indicated in the downlink indication information 1.

An example in which the first information is the HARQ-ACK information is used. As shown in FIG. 6, the network device sends downlink data A to the terminal within the DTX active time of the first cell, and the terminal correctly receives the downlink data A. In this case, the terminal is within the DRX non-active time of the first cell, and the terminal may send the HARQ-ACK information in the first time window within the DRX non-active time of the first cell.

In some other embodiments, in the first time window within the DRX non-active time of the first cell, the terminal may send at least one of the following information: the SR, the HARQ-ACK information, periodic or semi-persistent or aperiodic CSI, a periodic or semi-persistent or aperiodic SRS, and a CG-PUSCH.

According to the foregoing embodiment, within the DRX non-active time of the first cell, the network device and the terminal are not constrained by the DRX of the first cell, the terminal may send, in the first cell, the first information within the DRX non-active time of the first cell, and the network device may receive, in the first cell, the first information within the DRX non-active time of the first cell. Even if the DRX active time of the first cell does not completely overlap the C-DRX active time and/or the DTX active time of the first cell, transmission of the first information may be performed between the terminal and the network device.

FIG. 7 shows an example of a possible schematic flowchart of a communication method according to an embodiment of this application. A solution in FIG. 7 is described by using an example in which a network device and a terminal interact with each other. For related descriptions of the network device and the terminal, refer to the foregoing content. Details are not described herein again.

As shown in FIG. 7, the method includes the following steps.

Step 701: The network device sends first configuration information to the terminal.

Correspondingly, the terminal receives the first configuration information from the network device.

The first configuration information in this embodiment of this application includes a plurality of possible implementations.

The first configuration information includes DTX configuration information of a first cell, and the DTX configuration information of the first cell indicates DTX non-active time of the first cell.

In this embodiment of this application, that the network device sends the first configuration information to the terminal may be understood as that the network device configures or enables DTX of the first cell, and that the terminal receives the first configuration information may be understood as that the DTX of the first cell is configured or enabled for the terminal. In some other embodiments, after sending the first configuration information to the terminal, the network device may further send indication information to the terminal, where the indication information indicates the terminal to switch or enable the DTX of the first cell. After receiving the indication information, the terminal switches or enables the DTX of the first cell. The first configuration information may be carried in RRC signaling, and the indication information may be carried in DCI or a MAC CE.

The terminal may not receive some downlink signals within the DTX non-active time of the first cell. For example, the terminal may disable, within the DTX non-active time of the first cell, a channel configured to receive a downlink signal. For another example, the terminal may disable, within the DTX non-active time of the first cell, a radio frequency processor configured to receive a downlink signal. For another example, the terminal may disable, within the DTX non-active time of the first cell, an intermediate frequency processor configured to receive a downlink signal. For another example, the terminal may disable, within the DRX non-active time, a baseband processor configured to receive a downlink signal. In this way, power consumption of the terminal can be reduced. Correspondingly, the network device may not send some downlink signals within the DTX non-active time of the first cell. For example, the network device may disable, within the DRX non-active time, a channel configured to send a downlink signal. For another example, the network device may disable, within the DRX non-active time, a radio frequency processor configured to send a downlink signal. For another example, the network device may disable, within the DRX non-active time, an intermediate frequency processor configured to send a downlink signal. For another example, the network device may disable, within the DRX non-active time, a baseband processor configured to send a downlink signal.

In another implementation, the DTX configuration signal of the first cell further indicates DTX active time of the first cell. The terminal may receive any downlink signal within the DTX active time of the first cell. Correspondingly, the network device may send any downlink signal within the DTX active time of the first cell.

For example, the DTX configuration information of the first cell may include a DTX cycle of the first cell, and one DTX cycle of the first cell includes the DTX active time of the first cell and the DTX non-active time of the first cell. The terminal may repeatedly enter the DTX active time and the DRX non-active time of the first cell in a unit of a time length of the cycle. The DTX configuration information of the first cell may directly or indirectly indicate the DTX non-active time of the first cell. For example, the DTX configuration information of the first cell may indicate the DTX cycle and the DTX active time of the first cell, and the network device and the terminal determine the DTX non-active time of the first cell based on the DTX cycle and the DTX active time of the first cell. A specific implementation in which the DTX configuration information of the first cell indicates the DTX non-active time of the first cell is not limited in this application.

In still some implementations, when the network device and/or the terminal configure/configures the DTX of the first cell, DRX of the first cell may be configured or not configured.

For example, the network device and/or the terminal configure/configures the DRX of the first cell. The first configuration information may further include DRX configuration information of the first cell, and the DRX configuration information of the first cell indicates DRX active time of the first cell. The network device may receive any uplink signal within the DRX active time of the first cell. Correspondingly, the terminal may send any uplink signal within the DRX active time of the first cell. It should be understood that the network device may not receive some uplink signals within the DRX non-active time of the first cell. Correspondingly, the terminal may not send some uplink signals within the DRX non-active time of the first cell.

For example, if the network device does not configure the DRX of the first cell, the network device may always be in a state in which an uplink signal is normally received, that is, the network device may receive the uplink signal based on specific configuration information of the uplink signal. For another example, if the terminal does not configure the DRX of the first cell, the terminal may always be in a state in which the uplink signal can be normally sent, and may send the uplink signal based on the specific configuration information of the uplink signal.

It should be understood that the DTX configuration information of the first cell and the DRX configuration information of the first cell may be carried in a same message for sending, or may be carried in different messages for sending. This is not limited in this application, and a sequence relationship of sending the DTX configuration information of the first cell and sending the DRX configuration information of the first cell by the network device is not limited in this application.

Step 702: The network device sends, in the first cell, second downlink control information DCI within the DTX non-active time of the first cell. The second DCI may be DCI scrambled by using one of RNTIs: a C-RNTI, a CS-RNTI, or an MCS-C-RNTI.

Correspondingly, the terminal receives, in the first cell, the second downlink control information DCI within the DTX non-active time of the first cell.

In a possible implementation, the network device sends, in the first cell, the second DCI within the DTX non-active time of the first cell, where the time falls within the DRX active time of the first cell. Correspondingly, the terminal receives, in the first cell, the second DCI within the DTX non-active time of the first cell, where the time falls within the DRX active time of the first cell.

For example, before step 702, the terminal sends an SR to the network device within the DRX active time of the first cell (or a cell other than the first cell). After receiving the SR, the network device needs to send the second DCI to the terminal, but the network device is within the DTX non-active time of the first cell when needing to send the second DCI. In a possible implementation, the network device sends, in the first cell, the second DCI within the DTX non-active time of the first cell based on the received scheduling request SR. Correspondingly, the terminal receives, in the first cell, the second DCI within the DTX non-active time of the first cell, where the second DCI is for scheduling first uplink data of the terminal.

For example, before step 702, after receiving first downlink data from the network device, the terminal sends a negative acknowledgment (negative acknowledgment, NACK) to a base station within the DRX active time of the first cell (or a cell other than the first cell). The NACK indicates that the terminal fails to decode a PDSCH. Then, the network device needs to retransmit the first downlink data to the terminal, but the network device is within the DTX non-active time of the first cell when having a requirement for retransmission. In a possible implementation, the network device sends, in the first cell, the second DCI within the DTX non-active time of the first cell based on the NACK that is received from the terminal and that is for the first downlink data. Correspondingly, the terminal receives, in the first cell, the second DCI within the DTX non-active time of the first cell, where the second DCI is for scheduling retransmission of the first downlink data. It should be understood that, only if the terminal needs to send the NACK to the base station after receiving the first downlink data, the terminal needs to receive, in the first cell, the second DCI within the DTX non-active time of the first cell. If the terminal needs to send an ACK to the base station after receiving the first downlink data, where the ACK indicates that the terminal successfully decodes the PDSCH, the terminal does not need to receive, in the first cell, the second DCI.

In a possible implementation, that the network device sends, in the first cell, the second downlink control information DCI within the DTX non-active time of the first cell may be implemented in the following manner: The network device sends the second DCI in a second time period within the DTX non-active time of the first cell, and skips sending, in the first cell, the DCI in a time period other than the second time period within the DTX non-active time of the first cell. Correspondingly, the terminal receives the second DCI in the second time period within the DTX non-active time of the first cell, and skips receiving, in the first cell, the DCI in the time period other than the second time period within the DTX non-active time of the first cell.

A length and/or a start position of the second time period may be indicated by the network device, or may be predefined in a protocol. The start position of the second time period may be a start position or an end position of a time unit in which the SR is sent, or the start position of the second time period is a start position or an end position of a time unit in which the negative acknowledgment that is for the first downlink data is sent.

In some embodiments, the network device is within the DTX non-active time of the first cell when needing to send the second DCI, and the network device may send the second DCI in the second time period within the DTX non-active time of the first cell without being constrained by DTX configuration of the first cell, and does not send the second DCI due to being continuously constrained by the DTX configuration of the first cell outside the second time period.

In some other embodiments, the network device is within the DTX non-active time of the first cell when needing to send the second DCI, and the network device may send first signaling to the terminal, where the first signaling indicates to disable the DTX of the first cell. After the DTX of the first cell is disabled, the terminal may always be in a state in which downlink information can be received. Then, the network device may send the second DCI, and the terminal device may receive the second DCI. After the second DCI is sent, second signaling is sent to the terminal, where the second signaling indicates to enable the DTX of the first cell.

In another implementation, the length of the second time period may be a length of a time window (or duration of a timer) indicated by the network device or predefined in a protocol. An end position of the second time period may be a start position or an end position of a time unit in which a pending (to-be-processed) SR is canceled (canceled).

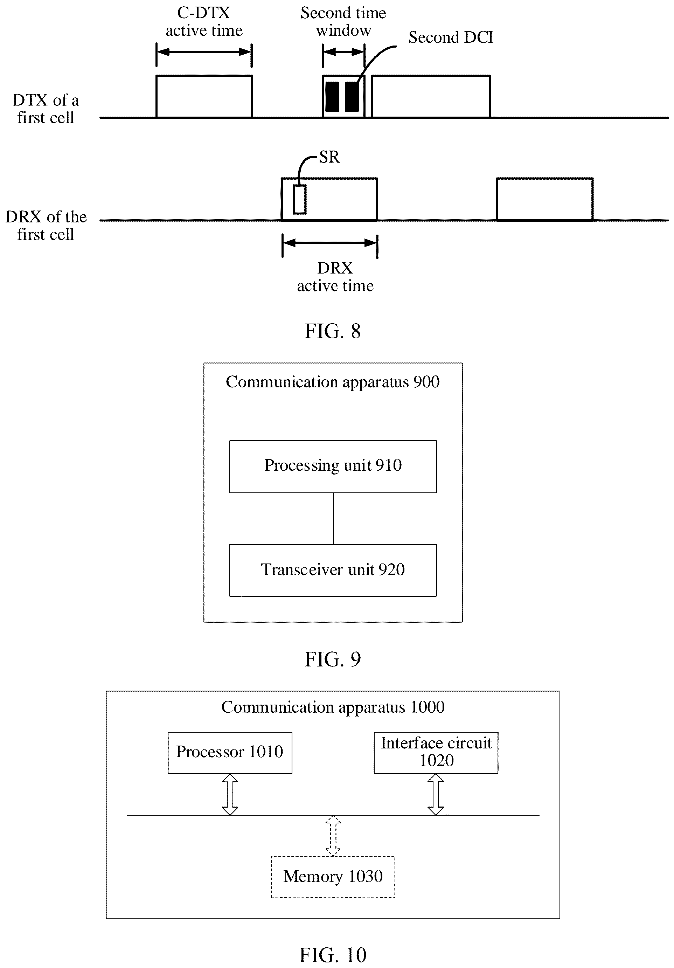

An example in which the terminal sends the SR to the network device within the DRX active time of the first cell is used. As shown in FIG. 8, the network device receives the SR within the DRX active time of the first cell, and needs to send the second DCI to the terminal. In this case, the network device is within the DTX non-active time of the first cell, and the network device may send the second DCI in a second time window within the DTX non-active time of the first cell, where the second DCI is for scheduling first uplink data of the terminal. In some other embodiments, when the terminal sends the NACK to the base station within the DRX active time of the first cell, the network device needs to retransmit the first downlink data to the terminal, or the network device may send the second DCI in the second time window within the DTX non-active time of the first cell, where the second DCI is for scheduling retransmission of the first downlink data.

According to the foregoing embodiment, the network device may send, in the first cell, the second DCI within the DTX non-active time of the first cell, and the terminal may receive, in the first cell, the second DCI within the DTX non-active time of the first cell. Even if C-DRX non-active time does not completely overlap the DRX active time of the first cell, transmission of the second DCI may be performed between the terminal and the network device.

Based on the foregoing embodiment, the first configuration information may further include DTX configuration information of a second cell in a cell group, and the first cell is a cell in the cell group. It should be understood that the first configuration information may further include DTX configuration information of a cell other than the first cell and the second cell in the cell group. This is not limited herein. The cell group may be a master cell group (master cell group, MCG) or a secondary cell group (secondary cell group, SCG). Alternatively, the cell group may be divided based on different frequency bands, or may be divided based on different TRPs.

In a possible implementation, the network device may send, in the second cell, third DCI in the second time period. Correspondingly, the terminal may receive, in the second cell, the third DCI in the second time period. In this way, the terminal may receive the second DCI of the first cell, and may also receive the third DCI of the second cell.

For example, the terminal sends the SR to the network device within the DRX active time of the first cell, the network device needs to send DCI, the network device may send, in the second cell, the third DCI in the second time period, and the second cell may be within the DTX active time or the DTX non-active time. The first cell and the second cell are cells in a same cell group. In other words, the terminal sends the SR to the network device within the DRX active time of the first cell. Regardless of whether each cell in the cell group to which the first cell belongs is within the DTX active time or the DTX non-active time, the network device may send, in any cell in the cell group to which the first cell belongs, the DCI in the second time period. Correspondingly, after the terminal sends the SR to the network device within the DRX active time of the first cell, the terminal needs to receive, in all cells in the cell group to which the first cell belongs, the DCI in the second time period.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 9 and FIG. 10 are diagrams of structures of possible communication apparatuses according to embodiments of this application. These communication apparatuses may be configured to implement functions of the terminal or the network device in the foregoing method embodiments, and therefore can also implement beneficial effects in the foregoing method embodiments. In embodiments of this application, the communication apparatus may be one of the terminals 120a to 120j shown in FIG. 1, or may be the network device 110a or 110b shown in FIG. 1, or may be a module (for example, a chip) used in the terminal or the network device.

As shown in FIG. 9, a communication apparatus 900 includes a processing unit 910 and a transceiver unit 920. The communication apparatus 900 is configured to implement the function of the terminal or the network device in the method embodiment shown in FIG. 5 or FIG. 7.

When the communication apparatus 900 is configured to implement the function of the terminal in the method embodiment shown in FIG. 5, the transceiver unit 920 is configured to: receive first configuration information from a network device, where the first configuration information includes discontinuous reception DRX configuration information of a first cell, and the DRX configuration information of the first cell indicates DRX non-active time of the first cell; and send, in the first cell, first information within the DRX non-active time of the first cell, where the first information includes hybrid automatic repeat request-acknowledgment HARQ-ACK information and/or a scheduling request SR.

In a possible design, the transceiver unit 920 is configured to: send the first information in a first time period within the DRX non-active time of the first cell; and skip sending, in the first cell, the HARQ-ACK and the SR in a time period other than the first time period within the DRX non-active time of the first cell.

In a possible design, the first time period is indicated by the network device, or the first time period is predefined in a protocol.

In a possible design, the first information is the HARQ-ACK information, and the first time period is indicated by the network device. The transceiver unit 920 is configured to receive first downlink control information DCI, where the first DCI indicates a sending occasion of the HARQ-ACK information. The processing unit 910 is configured to determine a start position of the first time period based on the sending occasion of the HARQ-ACK information.

When the communication apparatus 900 is configured to implement the function of the network device in the method embodiment shown in FIG. 5, the transceiver unit 920 is configured to: send first configuration information, where the first configuration information includes discontinuous reception DRX configuration information of a first cell, and the DRX configuration information of the first cell indicates DRX non-active time of the first cell; and receive, in the first cell, first information within the DRX non-active time of the first cell, where the first information includes hybrid automatic repeat request-acknowledgment HARQ-ACK information and/or a scheduling request SR.

In a possible design, the transceiver unit 920 is configured to: receive the first information in a first time period within the DRX non-active time of the first cell; and skip receiving, in the first cell, the HARQ-ACK and the SR in a time period other than the first time period within the DRX non-active time of the first cell.

In a possible design, the first time period is determined by the network device, or the first time period is predefined in a protocol.

In a possible design, the first information is the HARQ-ACK information, and the first time period is indicated by the network device. The transceiver unit 920 is configured to send first downlink control information DCI, where the first DCI indicates a sending occasion of the HARQ-ACK information, and the sending occasion of the HARQ-ACK information is for determining a start position of the first time period.

When the communication apparatus 900 is configured to implement the function of the terminal in the method embodiment shown in FIG. 7, the transceiver unit 920 is configured to: receive first configuration information from a network device, where the first configuration information includes discontinuous transmission DTX configuration information of a first cell, and the DTX configuration information of the first cell indicates DTX non-active time of the first cell; and receive, in the first cell, second downlink control information DCI within the DTX non-active time of the first cell, where the second DCI includes DCI scrambled by using one of RNTIs: a C-RNTI, a CS-RNTI, or an MCS-C-RNTI.

In a possible design, the transceiver unit 920 is configured to: receive, in the first cell, the second DCI within the DTX non-active time of the first cell based on a sent scheduling request SR, where the second DCI is for scheduling first uplink data of the terminal; or receive, in the first cell, the second DCI within the DTX non-active time of the first cell based on a negative acknowledgment that is sent to the network device and that is for first downlink data, where the second DCI is for scheduling retransmission of the first downlink data.

In a possible design, the transceiver unit 920 is configured to: receive the second DCI in a second time period within the DTX non-active time of the first cell; and skip receiving, in the first cell, the DCI in a time period other than the second time period within the DTX non-active time of the first cell.

In a possible design, the second time period is indicated by the network device, or the second time period is predefined in a protocol.

In a possible design, a start position of the second time period is a start position or an end position of a time unit in which the SR is sent, or a start position of the second time period is a start position or an end position of a time unit in which the negative acknowledgment that is for the first downlink data is sent.

In a possible design, the first configuration information further includes DTX configuration information of a second cell in a cell group, the first cell is a cell in the cell group, and the transceiver unit 920 is configured to receive, in the second cell, third DCI in the second time period.

When the communication apparatus 900 is configured to implement the function of the network device in the method embodiment shown in FIG. 7, the transceiver unit 920 is configured to: send first configuration information, where the first configuration information includes discontinuous transmission DTX configuration information of a first cell, and the DTX configuration information of the first cell indicates DTX non-active time of the first cell; and send, in the first cell, second downlink control information DCI within the DTX non-active time of the first cell, where the second DCI includes DCI scrambled by using one of RNTIs: a C-RNTI, a CS-RNTI, or an MCS-C-RNTI.

In a possible design, the transceiver unit 920 is configured to: send, in the first cell, the second DCI within the DTX non-active time of the first cell based on a received scheduling request SR, where the second DCI is for scheduling first uplink data of a terminal; or send, in the first cell, the second DCI within the DTX non-active time of the first cell based on a negative acknowledgment that is received from a terminal and that is for first downlink data, where the second DCI is for scheduling retransmission of the first downlink data.

In a possible design, the transceiver unit 920 is configured to: send the second DCI in a second time period within the DTX non-active time of the first cell; and skip sending, in the first cell, the DCI in a time period other than the second time period within the DTX non-active time of the first cell.

In a possible design, the second time period is determined by the network device, or the second time period is predefined in a protocol.

In a possible design, a start position of the second time period is a start position or an end position of a time unit in which the SR is sent, or a start position of the second time period is a start position or an end position of a time unit in which the negative acknowledgment that is for the first downlink data is sent.

In a possible design, the first configuration information further includes DTX configuration information of a second cell in a cell group, the first cell is a cell in the cell group, and the transceiver unit 920 is configured to send, in the second cell, third DCI in the second time period.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, or store input data required by the processor 1010 to run the instructions, or store data generated after the processor 1010 runs the instructions.

When the communication apparatus 1000 is configured to implement the method shown in FIG. 5 or FIG. 7, the processor 1010 is configured to implement the function of the processing unit 910, and the interface circuit 1020 is configured to implement the function of the transceiver unit 920.

When the communication apparatus is a chip used in a terminal, the chip in the terminal implements the function of the terminal in the foregoing method embodiments. The chip in the terminal receives, through another module (for example, a radio frequency module or an antenna) in the terminal, information sent by a network device to the terminal. Alternatively, the chip in the terminal sends information to another module (for example, a radio frequency module or an antenna) in the terminal, where the information is sent by the terminal to a network device.

When the communication apparatus is a module used in the network device, the module in the network device implements the function of the network device in the foregoing method embodiments. The module in the network device receives information from another module (for example, a radio frequency module or an antenna) in the network device, where the information is sent by the terminal to the network device. Alternatively, the module in the network device sends information to another module (for example, a radio frequency module or an antenna) in the network device, where the information is sent by the network device to the terminal. The module in the network device may be a baseband chip of the network device, may be a CU, a DU, or another module, or may be an apparatus in an open radio access network (open radio access network, O-RAN) architecture, for example, an apparatus like an open CU or an open DU.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in the ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method is performed by a terminal or a module used in the terminal, and the method comprises:
receiving first configuration information from a network device, wherein the first configuration information comprises discontinuous reception DRX configuration information of a first cell, and the DRX configuration information of the first cell indicates DRX non-active time of the first cell; and
sending, in the first cell, first information within the DRX non-active time of the first cell, wherein the first information comprises hybrid automatic repeat request-acknowledgment HARQ-ACK information and/or a scheduling request SR.

2. The method according to claim 1, wherein sending, in the first cell, the first information within the DRX non-active time of the first cell comprises:
sending the first information in a first time period within the DRX non-active time of the first cell; and skipping sending, in the first cell, the HARQ-ACK information and the SR in a time period other than the first time period within the DRX non-active time of the first cell.

3. The method according to claim 2, wherein the first time period is indicated by the network device, or the first time period is predefined in a protocol.

4. The method according to claim 3, wherein the first information is the HARQ-ACK information, the first time period is indicated by the network device, and the method comprises:
receiving first downlink control information DCI, wherein the first DCI indicates a sending occasion of the HARQ-ACK information; and
determining a start position of the first time period based on the sending occasion of the HARQ-ACK information.

5. A communication method, wherein the method is performed by a terminal or a module used in the terminal, and the method comprises:
receiving first configuration information from a network device, wherein the first configuration information comprises discontinuous transmission DTX configuration information of a first cell, and the DTX configuration information of the first cell indicates DTX non-active time of the first cell; and receiving, in the first cell, second downlink control information DCI within the DTX non-active time of the first cell, wherein the second DCI comprises DCI scrambled by using one of RNTIs: a C-RNTI, a CS-RNTI, or an MCS-C-RNTI.

6. The method according to claim 5, wherein receiving the second DCI within the DTX non-active time of the first cell comprises:
receiving, in the first cell, the second DCI within the DTX non-active time of the first cell based on a sent scheduling request SR, wherein the second DCI is for scheduling first uplink data of the terminal; or
receiving, in the first cell, the second DCI within the DTX non-active time of the first cell based on a negative acknowledgment that is sent to the network device and that is for first downlink data, wherein the second DCI is for scheduling retransmission of the first downlink data.

7. The method according to claim 5 or 6, wherein receiving the second DCI within the DTX non-active time of the first cell comprises:
receiving the second DCI in a second time period within the DTX non-active time of the first cell; and skipping receiving, in the first cell, the DCI in a time period other than the second time period within the DTX non-active time of the first cell.

8. The method according to claim 7, wherein the second time period is indicated by the network device, or the second time period is predefined in a protocol.

9. The method according to claim 7 or 8, wherein a start position of the second time period is a start position or an end position of a time unit in which the SR is sent, or a start position of the second time period is a start position or an end position of a time unit in which the negative acknowledgment that is for the first downlink data is sent.

10. The method according to any one of claims 7 to 9, wherein the first configuration information further comprises DTX configuration information of a second cell in a cell group, the first cell is a cell in the cell group, and the method further comprises:
receiving, in the second cell, third DCI in the second time period.

11. A communication method, wherein the method is performed by a network device or a module used in the network device, and the method comprises:
sending first configuration information, wherein the first configuration information comprises discontinuous reception DRX configuration information of a first cell, and the DRX configuration information of the first cell indicates DRX non-active time of the first cell; and
receiving, in the first cell, first information within the DRX non-active time of the first cell, wherein the first information comprises:
hybrid automatic repeat request-acknowledgment HARQ-ACK information and/or a scheduling request SR.

12. The method according to claim 11, wherein receiving, in the first cell, the first information within the DRX non-active time of the first cell comprises:
receiving the first information in a first time period within the DRX non-active time of the first cell; and skipping receiving, in the first cell, the HARQ-ACK information and the SR in a time period other than the first time period within the DRX non-active time of the first cell.

13. The method according to claim 12, wherein the first time period is determined by the network device, or the first time period is predefined in a protocol.

14. The method according to claim 13, wherein the first information is the HARQ-ACK information, the first time period is indicated by the network device, and the method comprises:
sending first downlink control information DCI, wherein the first DCI indicates a sending occasion of the HARQ-ACK information, and the sending occasion of the HARQ-ACK information is for determining a start position of the first time period.

15. A communication method, wherein the method is performed by a network device or a module used in the network device, and the method comprises:
sending first configuration information, wherein the first configuration information comprises discontinuous transmission DTX configuration information of a first cell, and the DTX configuration information of the first cell indicates DTX non-active time of the first cell; and sending, in the first cell, second downlink control information DCI within the DTX non-active time of the first cell, wherein the second DCI comprises DCI scrambled by using one of RNTIs: a C-RNTI, a CS-RNTI, or an MCS-C-RNTI.

16. The method according to claim 15, wherein sending the second DCI within the DTX non-active time of the first cell comprises:
sending, in the first cell, the second DCI within the DTX non-active time of the first cell based on a received scheduling request SR, wherein the second DCI is for scheduling first uplink data of a terminal; or
sending, in the first cell, the second DCI within the DTX non-active time of the first cell based on a negative acknowledgment that is received from a terminal and that is for first downlink data, wherein the second DCI is for scheduling retransmission of the first downlink data.

17. The method according to claim 15 or 16, wherein sending the second DCI within the DTX non-active time of the first cell comprises:
sending the second DCI in a second time period within the DTX non-active time of the first cell; and skipping sending, in the first cell, the DCI in a time period other than the second time period within the DTX non-active time of the first cell.

18. The method according to claim 17, wherein the second time period is determined by the network device, or the second time period is predefined in a protocol.

19. The method according to claim 17 or 18, wherein a start position of the second time period is a start position or an end position of a time unit in which the SR is sent, or a start position of the second time period is a start position or an end position of a time unit in which the negative acknowledgment that is for the first downlink data is sent.

20. The method according to any one of claims 17 to 19, wherein the first configuration information further comprises DTX configuration information of a second cell in a cell group, the first cell is a cell in the cell group, and the method further comprises:
sending, in the second cell, third DCI in the second time period.

21. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 20 through a logic circuit or by executing code instructions.

22. A computer-readable storage medium, wherein the storage medium stores a computer program or instructions, and when the computer program or the instructions are executed by a communication apparatus, the method according to any one of claims 1 to 20 is implemented.

23. A computer program product, wherein the computer program product stores a computer program, the computer program comprises program instructions, and when the program instructions are executed by a computer, the computer is enabled to perform the method according to any one of claims 1 to 20.
